Europäisches Patentamt

European Patent Office

Office européen des brevets

(11) Publication number: **0 155 029**
A1

# EUROPEAN PATENT APPLICATION

(21) Application number: **85200203.9**

(22) Date of filing: **19.02.85**

(51) Int. Cl.⁴: **C 21 D 9/00,** C 21 D 1/18, F 16 B 19/06

(30) Priority: **01.03.84 NL 8400667**

(43) Date of publication of application: **18.09.85** Bulletin 85/38

(84) Designated Contracting States: **AT BE CH DE FR GB IT LI LU NL SE**

(71) Applicant: **NEDSCHROEF OCTROOI MAATSCHAPPIJ N.V., Kanaaldijk NW 71, NL-5707 LC Helmond (NL)**

(72) Inventor: **Feringa, Hendrik, Jan van Goyenlaan 158, NL-5702 BG Helmond (NL)**
Inventor: **Overbeeke, Johannes Leendert, Jonkheer Marcus van Gerwenlaan 12, NL-5671 CG Nuenen (NL)**

(74) Representative: **Kooy, Leendert Willem et al, OCTROOIBUREAU VRIESENDORP & GAADE P.O. Box 266, NL-2501 AW The Hague (NL)**

(54) **A method for improving the static and dynamic strength of a steel rivet for riveted joints and a rivet, obtained by application of said method.**

(57)     A method for improving the static and dynamic strength of a steel rivet for riveted joints is characterized in that the steel of the rivet is heat treated.

A rivet, obtained by application of the method according to the invention is characterized in that the transition between the shank (1) and the head (2) is formed by a recess in the head (2).

Figure 2.

EP 0 155 029 A1

-1-

A METHOD FOR IMPROVING THE STATIC AND DYNAMIC STRENGTH OF A STEEL RIVET FOR RIVETED JOINTS AND A RIVET, OBTAINED BY APPLICATION OF SAID METHOD.

The invention relates to a method for improving the static and dynamic strength of a steel rivet for riveted joints.

In the development of assembly techniques, riveting has been practically superseded by welded and bolted joints. A factor, which has certainly attributed to this is the laborious connecting method with riveting hammers.

Yet there are still applications in which the riveted joints have appeared to be indipensible. In these applications, however, the noisy hot or cold riveting with hammers was replaced by cold pressing with hydraulic equipment. In this development, the strength or load capacity of the rivet has not or hardly been evaluated. The necessity to do so was lacking, partly because of the fact that the strength of the different kinds of construction steel was not really increased during that period.

However, now that relatively recent developments in the manufacture of construction steel have yielded types of steel having a considerably higher strength, such as for instance HSLA steel (HSLA = High Strength Low Alloy), increasing both the static and the dynamic strength of the riveted joints has also become necessary, in order to optimally apply them.

According to the invention, the static and dynamic strength of a steel rivet for riveted joints is increased by heat treating the steel of the rivet.

This heat treatment can take place before or after manufacturing the rivet. This increases both the static and the dynamic strength considerably while it remains possible to realize the riveted joint and maintain a technically acceptable deformability of the rivet.

In a preferred embodiment of the method according to the invention the steel of the rivet is heat treated by hardening the steel at a temperature ranging between 850 and 900$^{\circ}$C and, thereafter, by tempering it at a temperature range between 400 and 700$^{\circ}$C.

By the heat treatment, the rivet gets a microstructure consisting of one or more of the following structures:
tempered martensite, bainite, troostite, and sorbite.

According to the invention, the hardenability of the steel of the rivet is obtained by application of steel having a carbon content of 0.12 per cent - 0.55 per cent, a phosphor content of maximally 0.5 per cent and a sulphur content of 0.06 per cent, in which dependent on the desired hardness, at least one through-hardening promoting element is present.

The invention will be elucidated further with the help of a few embodiments.

Fig. 1 is a partial longitudinal section of a rivet, obtained by

-3-

application of the method according to the invention,

fig. 2 is a variation of the embodiment of the rivet according to fig. 1,

fig. 3A and 3B show a part of a rivet in a  joint    before and after the riveting respectively, in which a sharp, rectangular transition is present between the head and the shank and

fig. 4A and 4B correspond with the fig. 3A and 3B, in  which  a rounded transition is present between the head and the shank.

The present invention relates to a method for improving the static and dynamic strength of a steel rivet.

According to the invention this improvement is obtained by heat treating the steel of the rivet.

According to the invention, the steel of the rivet is heat treated in the following way:

dependent on its composition the steel of the rivet is heat treated by hardening the steel at a temperature ranging between 850 and 900$^{\circ}$C and, thereafter, by tempering it at a temperature ranging between 400 and 700$^{\circ}$C.

By the heat treatment, the rivets gets a microstructure consisting of one or more of the following structures:
tempered martensite, bainite, troostite, and sorbite. On tempering the hardened steel of the rivet at a temperature of $\pm$ 400$^{\circ}$C, roughly 90 per cent martensite is formed, whereas, as a higher annealing temperature is chosen, the martensite content is decreased and, successively, bainite, troostite and sorbite are

-4-

formed, the content of which increases as the temperature rises.

By application of the measures according to the invention, both the static and the dynamic strength of the rivet in the riveted joint are increased considerably, and at the same time, it remains possible to realize the riveted joint and maintain a technically acceptable deformability of the rivet. This has appeared from a test, the results of which are shown in the following table and graph.

In the table, the shearing force in kN of the rivet of a non-heat treatable kind of steel (max. HB 128) is compared with the shearing force of a heat treated rivet, having a hardness of HB 280. The diameter of the rivet in this embodiment is 12 mm, and the test was done on a single lap joint.

TABLE

| Rivet | | Shearing force (kN) |
|-------|---|---------------------|
| Rst | 36 - 2 | 44.2 - 43.6 - 44.0 |
| HB | 280 | 78.8 - 77.9 - 76.8 |

It follows from the table, that the shearing force of the rivet is increased by $\pm$ 77.5 per cent on average by heat treating it.

In the graph the number, N, of variations of the dynamic test is plotted on the horizontal axis and on the vertical axis the external dynamic load of the test piece, consisting of a riveted joint in the form of a single lap joint with non-heat treated (Rst 36 - 2) and and heat treated rivets Ø 12 mm. The external load F in kN is an alternating tensile-compressive load.

The horizontal lines in the graph indicate the scatter   areas
of the observed results of the test.

The hardenability of the steel of the rivet is, according to the
invention, obtained by application of steel having a carbon
content of 0.12 per cent - 0.55 per cent, a phosphor content of
maximally 0.05 per cent and a sulphur content of 0.06 per cent,
in which, dependent on the desired hardness, at least one
through-hardening promoting element is present.

According to the invention, the steel can furthermore contain
manganese and/or chrome as a through-hardening promoting element,
in which the through-hardening promoting element is a very
effective alloy element. According to the invention, the very
effective alloy element is for instance boron, in which $\pm$ 0.008
per cent B yields the same through-hardening as $\pm$ 1.4 per cent Cr.

According to the invention, the dynamic strength of the rivet can
be further improved, as will be further elucidated here with
the help of the drawings.

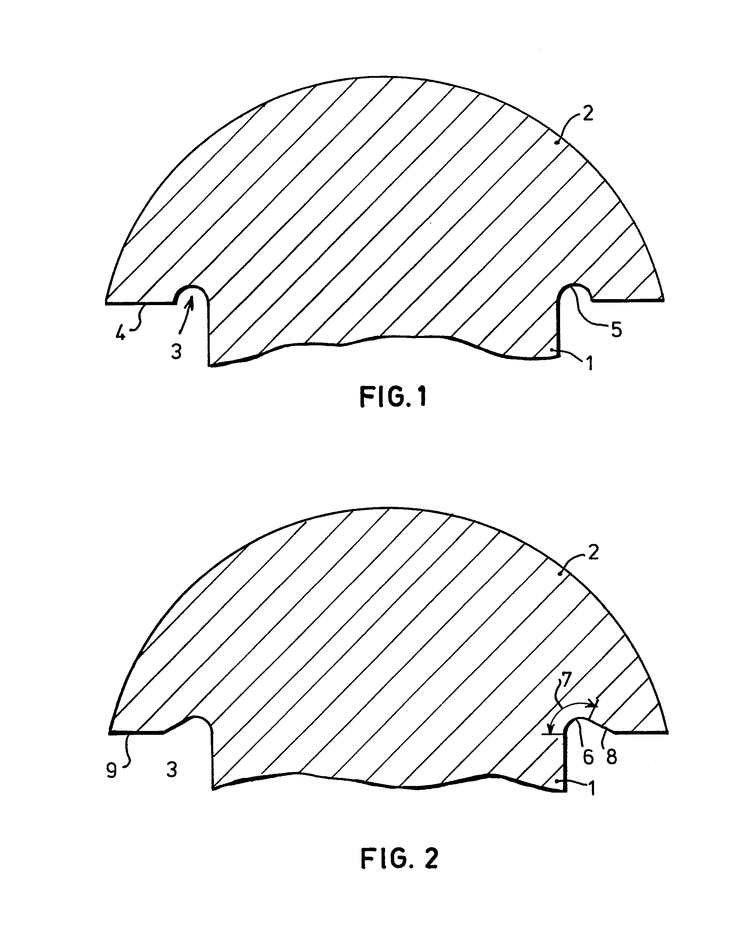

In the rivet according to fig. 1 and 2, the transition between
the shank 1 and the head 2 is formed by a preferably rounded
recess 3 in the abutting face 4 of the head 2.

In the embodiment according to fig. 1, the recess 3 consists of
a groove 5 with a semi-circular cross section and in the
embodiment according to fig. 2 of a groove 6 having a cross
section of a part of an arc of a circle 7 over $\pm$ 120$^{\circ}$, in which
the arc of the circle is prolonged by a tangent 8 thereto, which
encloses angle of approximately 30$^{\circ}$ with the abutting face 9 of
the head 2.

Results of dynamic test of riveted joints , single lap joint,
non heat treated (Rst 36 - 2) and heat treated rivet Ø 12 mm.

The embodiment according to fig. 2 of the recess 3 is preferred, because the shape of the recess will approach that of fig. 2 on manufacturing the rivet by cold-deforming.

Because of the rounded recess between the head and the shank of the rivet, the notch effect of the usual transition between head and shank is considerably decreased during riveting, if not entirely reduced to zero by upsetting the shank of the rivet and the security degree is improved, while, at the same time, the dynamic-strength of the rivet is increased.

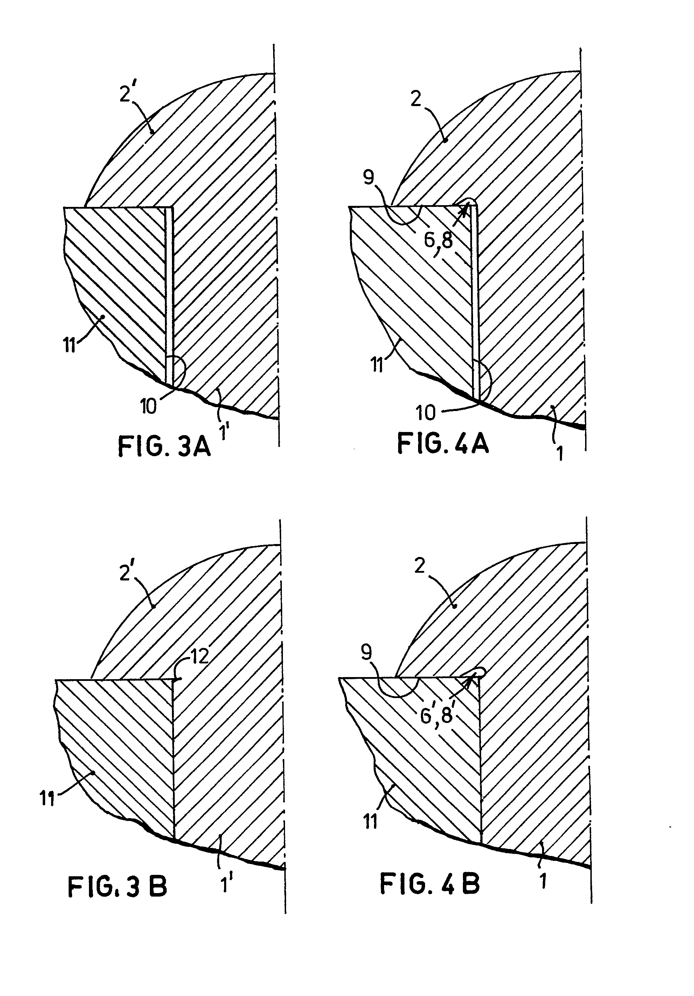

The difference in sharpness of the transition between head and shank and the notch factor arising therefrom after riveting the existing rivet and the rivet according to the invention is further elucidated with the help of fig. 3A and 3B, 4A and 4B.

If the riveted joint is riveted according to fig. 3A, the diameter of the shank 1' increases, and fills up the hole 10 in the plate, whereas the diameter of the head 2' does not increase. This causes a sharp fold or notch 12 in the transition between the head 2' and the shank 1' (fig. 3B).

According to fig. 4A, the rivet 1, 2 according to fig. 2 has been applied in the riveted joint 10,11. The riveted joint has now been provided with the rounded recess 6, 8 in the transition between the shank 1 and the head 2.

In riveting, fig. 4B, the diameter of the shank 1 increases, but no sharp fold or notch arises between the head 2 and the shank 1. A recess 6', 8' is formed, having a smoothly running line from the abutting face 9 of the head 2 to the external face of the shank 1, the diameter of which is increased slightly.

0155029

-1-

CLAIMS:

1. A method for improving the static and dynamic strength of a steel rivet for riveted joints, characterized in that the steel of the rivet is heat treated.

2. A method according to claim 1, characterized in that the rivet is heat treated by hardening the steel at a temperature ranging between 850 and 900°C and, thereafter, by tempering it at a temperature ranging between 400 and 700°C.

3. A method according to claim 1 or 2, characterized in that the hardenability of the steel of the rivet is obtained by application of steel having a carbon content of 0.12 per cent – 0.55 per cent, a phosphor content of maximally 0.5 per cent and a sulphur content of 0.06 per cent, in which, dependent on the desired hardness, at least one through-hardening promoting element is present.

4. A method according to claim 3, characterized in that the through-hardening promoting element is manganese or chrome.

5. A method according to claim 3 or 4, characterized in that the through-hardening promoting element is a very effective alloy element.

-2-

6. A method according to claim 5, characterized in that the very effective alloy element is boron.

7. A rivet, obtained by applying the method according to one of the previous claims, characterized in that the transition between the shank (1) and the head (2) is formed by a recess (3) in the head(2).

8. A rivet according to claim 7, characterized in that the recess is limited by an arc of a circle (6), which at one end is prolonged by a tangent (8) to the arc of a circle (6).

9. A non heat treated rivet, characterized in that the transition between the shank and the head is formed by a recess in the head.

10. A non heat treated rivet according to claim 9, characterized in that the recess is limited by an arc of a circle, which at one end is prolonged by a tangent to the arc of a circle.

tD/AB/LvdM/DiS

0155029

FIG. 1

FIG. 2

FIG. 3A

FIG. 4A

FIG. 3 B

FIG. 4 B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 812 076 (MASSEY-FERGUSON) * Claims 1,4,5; figure 1; page 3, lines 9-14 * | 1,3,7-10 | C 21 D 9/00<br>C 21 D 1/18<br>F 16 B 19/06 |
| X | NL-B- 119 445 (KOHLE- UND EISENFORSCHUNG) * Page 2, lines 14-39 * | 1,2 | |
| X | US-A-1 966 401 (B.T. ANDREN) * Claim 1; figures * | 9,10 | |
| A | | 7,8 | |
| X | US-A-2 245 933 (N.B. MOORE) * Whole document * | 9 | |
| | | | TECHNICAL FIELDS SEARCHED (Int. Cl.4) |
| X | US-A-2 237 338 (H.S. DALE) * Claims; figure 4 * | 9 | C 21 D<br>F 16 B |
| A | NL-A-6 611 433 (KOBE STEEL) * Claims 1,3,4 * | 1-8 | |
| A | DE-B-1 817 205 (T. YAMAZAKI) * Claims * | 1-6 | |
| | --- -/- | | |

The present search report has been drawn up for all claims

| Place of search | Date of completion of the search | Examiner |
|---|---|---|
| THE HAGUE | 30-05-1985 | LIPPENS M.H. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | ELEKTROWÄRME INTERNATIONAL, vol. 42, no. 4, August 1984, pages B 197 - B 198, Essen, DE; K. ROTH: "Induktives Weichglühen von Nietbolzen" <br> * Page B 197, left-hand column * <br><br> ----- | 1-4 | |
| | | | TECHNICAL FIELDS SEARCHED (Int. Cl.4) |

The present search report has been drawn up for all claims

| Place of search <br> THE HAGUE | Date of completion of the search <br> 30-05-1985 | Examiner <br> LIPPENS M.H. |
|---|---|---|